# EUROPEAN PATENT APPLICATION

(11) **EP 2 327 603 A2**
(43) Date of publication of application: **01.06.2011**
(21) Application number: 10182468.8
(22) Date of filing: 29.09.2010
(51) Int. Cl.: B62B 3/02, B62B 3/18

(54) **A base frame for a roll cage and an improved roll cage**

(30) Priority: 03.03.2010 GB 1003534; 29.09.2009 GB 0917040
(71) Applicant: Melia, Mike, Fosters Green Skelmersdale Lancashire WN8 6UE (GB)
(72) Inventor: Melia, Mike, Fosters Green Skelmersdale Lancashire WN8 6UE (GB)

(57) **Abstract**

A base frame (20) for a roll cage comprising a main frame portion (22), and at least one moveable frame portion (24) which is moveable between a position of use, in which it is lockable, and a position of non-use, for tidy stowage of the roll cage, each of the main frame portion and the at least one moveable frame portion being provided with first engagement means (32) for engaging with second engagement means provided on a side panel of the roll cage.

## Description

The present invention relates to a base frame for a roll cage, including a roll cage incorporating conventional side panels, and to an improved roll cage, which incorporates a base frame according to the invention and a novel side panel.

A roll cage, also known as for example a roll trolley, a roll container, a roll pallet or a distribution cage, is a piece of apparatus used for temporarily storing and transporting goods, e.g. crates of food, clothes, etc., from one place to another, e.g. in a warehouse or a supermarket. A roll cage is movable, typically on castors or wheels, and is of a weight that allows it to be moved, often pushed or pulled, by a human being. Typically, a roll cage is made from a base frame onto which are mounted two, three or four side panels. A roll cage may also include tray panels, which are substantially horizontal panels, which act as shelves in the cage.

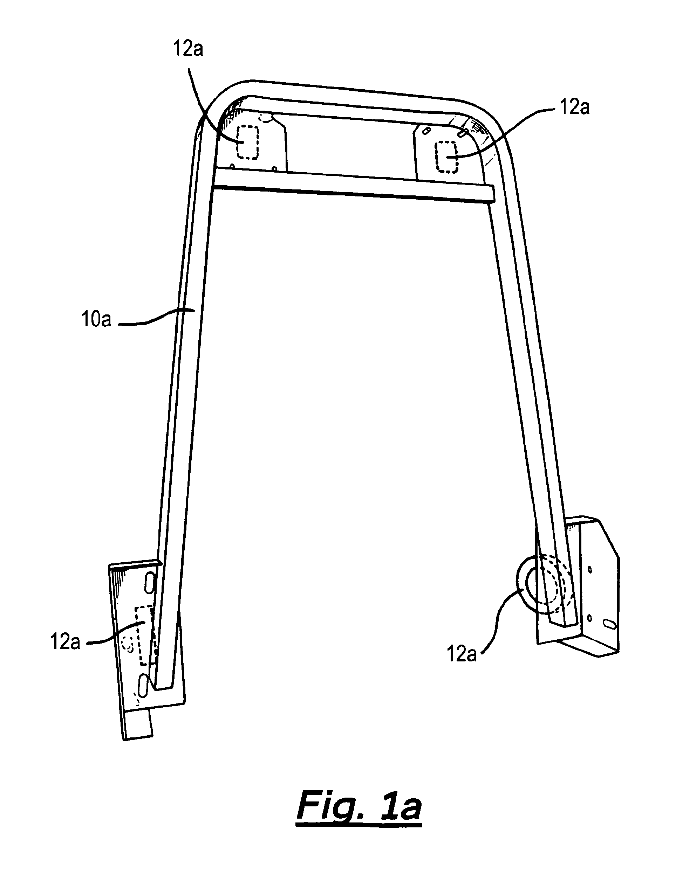

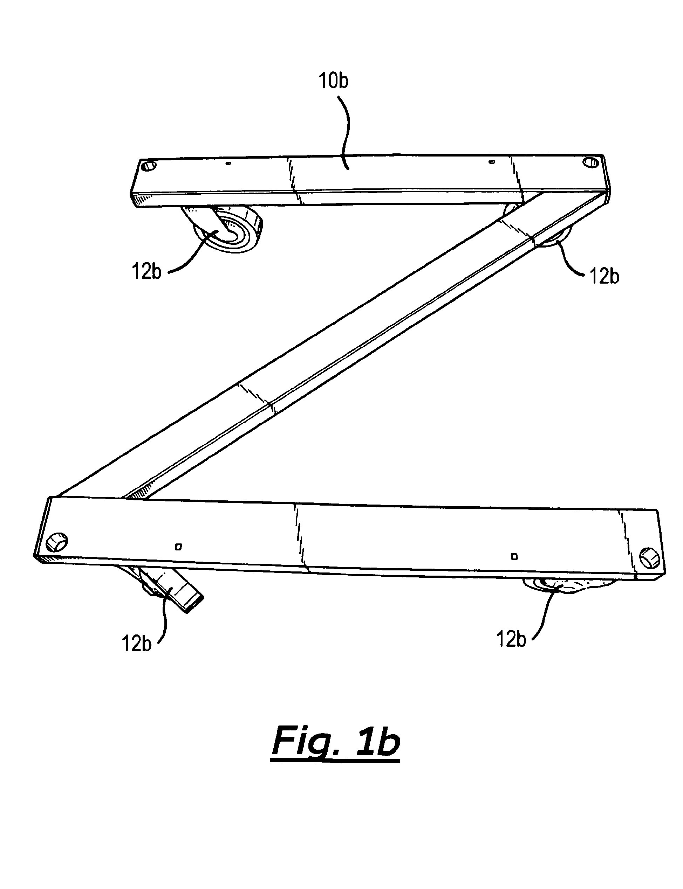

The base frame may be of a design known in the art as an "A-frame" (as shown in Figure 1a) or a "Z-frame" (as shown in Figure 1b). Figures 1a and 1b show that base frame 10a, 10b is provided on its underside with a number or wheels or castors 12a, 12b, which allow movement of the corresponding roll cage. There are a number of problems associated with each of these conventional base frames.

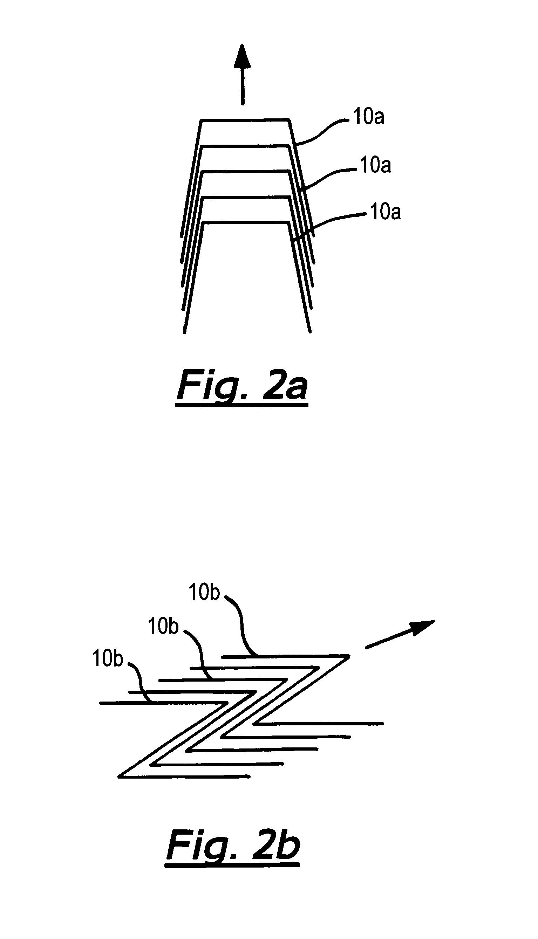

With the A-frame, its configuration means that it is inherently unstable and liable to tilt and fall over, especially when being moved. This instability is due to its relatively compact "footprint". However, the A-frame can be tidily stowed away because its configuration allows for space-efficient packing, as schematically shown in Figure 2a, which follows the direction of the arrow shown.

With the Z-frame, conversely, its configuration means that it is stable; it having a relatively open "footprint". However, this same footprint means that the Z-frame cannot be stowed away in a space-efficient manner, as schematically shown in Figure 2b. A number of Z-frames pack so as to follow a diagonal tangent, as shown by the arrow, which is not space-efficient and results in a row of Z-frames that is difficult to push and control the direction of.

It would therefore be desirable to provide a base frame, to which is fittable a side panel of either conventional form or as described in co-pending UK patent application number 0917039.0 by the same applicant, and which does not suffer the stability and stowage problems described above.

Accordingly, in a first aspect, the present invention provides a base frame for a roll cage comprising a main frame portion, and at least one moveable frame portion which is moveable between a position of use, in which it is lockable, and a position of non-use, for tidy stowage of the roll cage, each of the main frame portion and the at least one moveable frame portion being provided with first engagement means for engaging with second engagement means provided on a side panel of the roll cage.

Provision of at least one moveable frame portion as part of the main frame portion of a base frame in this manner introduces sufficient stability into the base frame for it to be much safer to use in a roll cage than prior art base frames because of the reduced liability of the roll cage to topple. Furthermore, the existence of the two positions (use and non-use) of the at least one moveable frame portion means that the base frame can be tidily stowed away in a space-efficient manner when it is not in use.

Preferably the at least one moveable frame portion is pivotable in the plane of the main frame portion.

The at least one moveable frame portion is preferably lockable into its use position as a result of the second engagement means provided on the side panel engaging with the first engagement means provided on each of the main frame portion and the at least one movable frame portion.

The at least one moveable frame portion may be lockable when in its position of non-use. Preferably locking of the at least one moveable frame portion occurs as a result of the second engagement means provided on the side panel engaging with the first engagement means provided on each of the main frame portion and the at least one moveable frame portion.

Typically, the main frame portion may comprise a central bar from each end of which, and in the same horizontal plane as, a leg portion may divergently extend. The leg portions preferably fixedly extend from the ends of the central bar. Indeed the leg portions and the central bar may be formed as an integral piece.

Advantageously the base frame may comprise two moveable frame portions, each of which extends divergently from the central bar when in their use positions. When pivoted to their non-use positions, the two moveable frame portions may each extend convergently from the central bar, so as to be substantially co-extensive with their respective adjacent leg portions.

The at least one moveable frame portion may be pivotally mounted on, and in the same horizontal plane as, the proximal end of a leg portion. Alternatively, the at least one moveable frame portion may be pivotally mounted on, and in the same horizontal place as, an end of the central bar. Such distinction may be rendered moot if the leg portions and the central bar form an integral piece.

The distal end of the at least one moveable frame portion may be provided with the first engagement means. Additionally, the distal end of each leg portion may be provided with the first engagement means. In both cases, the first engagement means may be in the form of an aperture, which may be formed in the leg portion itself and/or in a protrusion that extends upwardly from the leg portion.

Advantageously resilient bias means may be associated with the first engagement means in each leg portion and biased towards the distal end of each leg portion. Preferably, the resilient bias means is a mechanical spring, which may be a coil spring.

Beneficially, the distance between the first engagement means provided on the at least one moveable frame portion and the first engagement means provided on its adjacent leg portion when the at least one moveable frame portion is in its use position may be substantially the same as the distance between the two first engagement means when the at least one moveable frame portion is in its non-use position, the base frame thereby being capable of accommodating a side panel when in either configuration.

Usefully, the underside of each of the two moveable frame portions and the two leg portions may be provided with movement means, such as wheels, sliders, rollers, or the like.

Additionally, each of the moveable frame portions may be associated with an additional locking mechanism. This mechanism may be in the form of a latch, which may provide additional locking security to each of the moveable frame portions when in their use position and/or their non-use position. Preferably the latched locking mechanism is configured to automatically latch and lock into place but require manual intervention to achieve unlatching and unlocking.

Advantageously a base frame according to the invention may be made from a hard-wearing material such as steel or aluminium, or a composite such as carbon fibre or reinforced plastic. However any other material having similar properties may be used.

Roll cages are a common feature in places such as warehouses and supermarkets, and as such a large number of roll cages are already in existence, many having the disadvantages described earlier. Conveniently, therefore, a base frame according to the invention may be used in a roll cage with one or more conventional side panels.

Conventional side panels of roll cages also have disadvantages however, as is more fully described in co-pending patent application number 0917039.0 by the same applicant, which describes and claims a new and inventive side panel for a roll cage. A base frame according to the present invention may be used with a roll cage incorporating such a side panel, which itself comprises a body portion, and engagement means for engaging with a base frame of the roll cage, the engagement means being resiliently attached to the body portion by resilient attachment means, such that the engagement means is resiliently movable relative to the body portion and engageable with the base frame.

The at least one moveable frame portion is preferably locked into its use position as the side panel engages with both the main frame portion and the at least one movable frame portion. The use position is the position of the base frame when the roll cage is to be used for transporting and/or storing goods. Further preferably, the position of non-use, which is that adopted when the roll cage is to be tidily stowed away, is also lockable; the locking may again occur as the side panel engages with both the main frame portion and the at least one movable frame portion. The at least one moveable frame portion may be moved between its position of use and non-use by applying a force, e.g. pushing or pulling, to the side panel to effect movement, e.g. by pivoting, of the at least one moveable frame portion, without the need to remove the side panel. If an additional locking mechanism is provided, such as a gravity-drop latch as discussed above, this may need to be manually un-latched before movement of the side panel between the two positions can be effected.

Accordingly, the invention provides in a second aspect a roll cage comprising: a base frame, which comprises a main frame portion, and at least one movable frame portion which is movable between a position of use, in which it is lockable, and a position of non-use, for tidy stowage of the roll cage, each of the main frame portion and the at least one movable frame portion being provided with first engagement means for engaging with the side panel, and a side panel, which comprises a body portion and second engagement means for engaging with the base frame, wherein the second engagement means is resiliently attached to the body portion by a resilient attachment means, such that the second engagement means is resiliently movable relative to the body portion and thereby readily engageable with the first engagement means of the base frame.

For a better understanding, the invention will now be more particularly described, by way of non-limiting example only, with reference to and as shown in the accompanying schematic drawings (not to scale) in which:
Figure 1 a is a plan view from above of a prior art A-frame base from of a conventional roll cage;
Figure 1 b is a plan view from above of a prior art Z-frame base from of a conventional roll cage;
Figure 2a is a plan view from above of a number of prior art A-frames in a stowed away configuration;
Figure 2b is a plan view from above of a number of prior art Z-frames in a stowed away configuration;
Figure 3 is a plan view from above of a base frame according to the invention shown in its use configuration;
Figure 4 is a plan view from above of the base frame shown in Figure 3 in its stowable configuration;
Figure 5a is a plan view from above of the base frame shown in Figure 3 overlying the "footprint" of a prior art Z-frame;
Figure 5b is a plan view from above of the base frame shown in Figure 4 overlying the "footprint" of a prior art Z-frame;
Figure 6 is a plan view from above of a number of base frames according to the invention in their stowed away configuration;
Figure 7 is a perspective view of a variation of a base frame according to the invention shown in its use configuration;
Figure 8 is a top plan view of the variant base frame shown in Figure 7;
Figure 9 is a top plan view of the variant base frame shown in Figure 7 in its stowable configuration;
Figure 10 is a detailed view of part of the variant base frame shown in Figure 7;
Figure 11 is a perspective view of the variant base frame shown in Figure 7 having a side panel fitted to it;
Figure 12 is a perspective view of a roll cage according to the invention;
Figure 13 is a perspective view of a first variation of the roll cage shown in Figure 12;
Figure 14 is a perspective view of a second variation of the roll cage shown in Figure 12;
Figure 15 is a perspective view of a third variation of the roll cage shown in Figure 12; and
Figure 16 is a perspective view of a fourth variation of the roll cage shown in Figure 12.

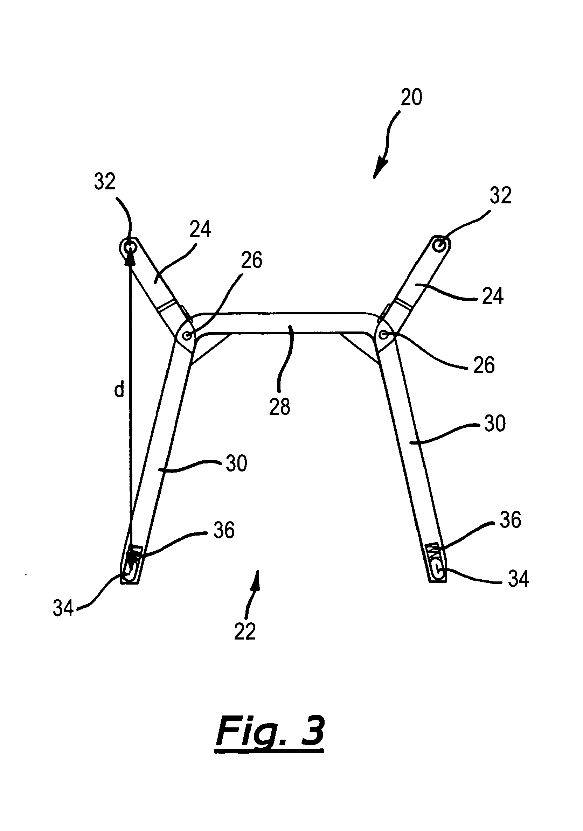

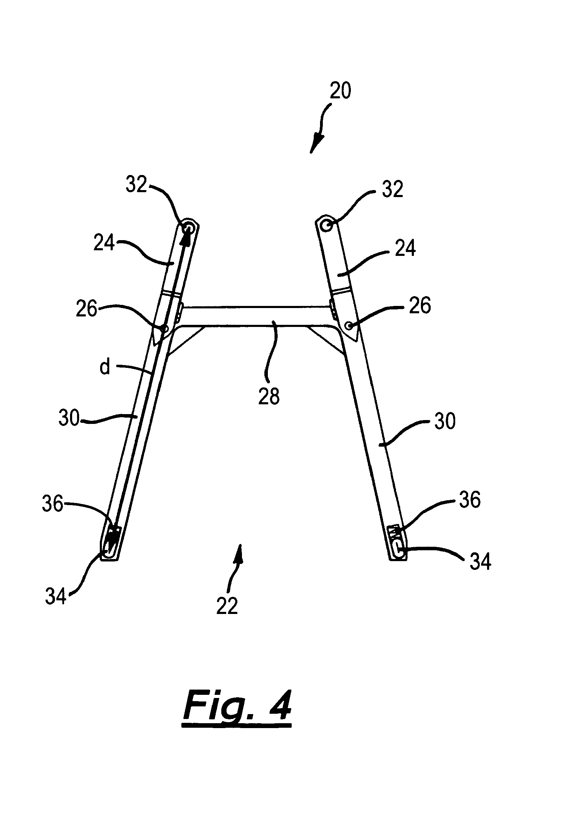

Figures 3 and 4 show a base frame 20 for a roll cage comprising a main frame portion 22 and two moveable frame portions 24 pivotally attached to main frame portion 22 at pivot points 26.

Main frame portion 22 comprises a central bar 28, from each end of which, and in the same horizontal plane as, leg portions 30 divergently extend. In the embodiment shown, leg portions 30 are formed integrally with central bar 28 and so fixedly extend therefrom.

Each moveable frame portion 24 is pivotally mounted on, and in the same horizontal place as, the proximal end of a leg portion 30, i.e. the end of leg portion 30 closest to central bar 28. Figure 3 shows base frame 20 in its use configuration, i.e. with moveable frame portions 24 extending divergently from the central bar 28. In this use position, frame 20 has most stability, which is beneficial as this is the position in which a roll cage (not shown) incorporating such a frame 20 would be moved for transporting goods. Figure 4 shows base frame 20 in its non-use configuration, i.e. with moveable frame portions 24 extending convergently from the central bar 28 such that each is substantially co-extensive with its respectively adjacent leg portion 30. In this non-use position, frame 20 is configured for space-efficient packing and stowage. The moveable frame portions 24 may be moved between their position of use and non-use by applying a force, e.g. pushing or pulling, to a side panel that may be fitted thereto to thereby effect pivotal movement of the moveable frame portions 24, without the need to remove the side panel.

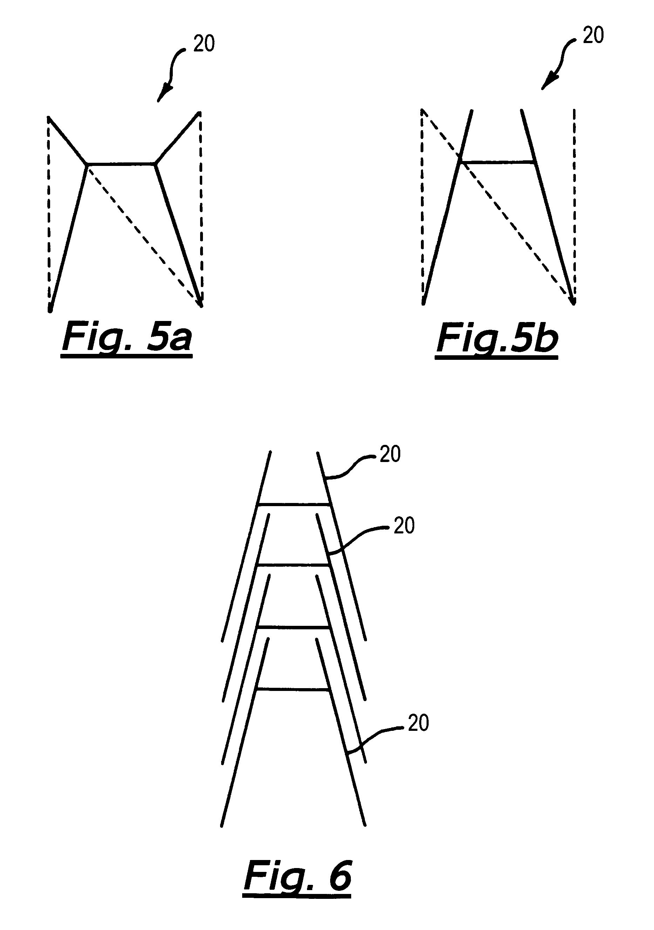

Figures 5a and 5b respectively show base frame 20 in its use position and in its non-use position compared to the "footprint" of a conventional Z-frame base illustrated by a dashed line. Clearly the use position shown in Figure 5a benefits from the larger footprint occupied by the more stable prior art Z-frame, unlike the non-use position shown in Figure 5b, which does not benefit from the Z-frame footprint and as a result is less stable. However, when in the non-use position, base frame 20 can be space-efficiently stowed, as shown in Figure 6, in a similar manner to the stowage of prior art A-frames, shown in Figure 2a.

Returning to Figures 3 and 4, the distal end of each moveable frame portion 24 is provided with first engagement means 32, in the form of an aperture in each, for engaging with a second engagement means provided in a side panel (not shown). The distal end is that end which is farthest from the central bar 28. Correspondingly, the distal end of each leg portion 30 is provided with first engagement means 34, also in the form of an aperture in each, again for engaging with a second engagement means provided in said side panel.

Preferably, the distance (d) between the first engagement means provided on the at least one moveable frame portion and the first engagement means provided on its adjacent leg portion when the at least one moveable frame portion is in its use position is substantially the same as the distance (d) between the two first engagement means when the at least one moveable frame portion is in its non-use position, the base frame thereby being capable of accommodating a side panel when in either configuration.

Engagement means 34 provided in leg portions 30 are additionally provided with resilient bias means 36, in the form of a mechanical coil spring, which are biased towards the distal ends of leg portions 30, i.e. resilient bias means 36 act in the direction away from the central bar 28. Resilient bias means 36 are provided within apertures 34 so as to provide mechanical grip to the engagement means of a side panel (not shown), typically in the form of a longitudinal leg. Bias means 36 are configured to abut and provide a compressive gripping force to a side panel engaging leg.

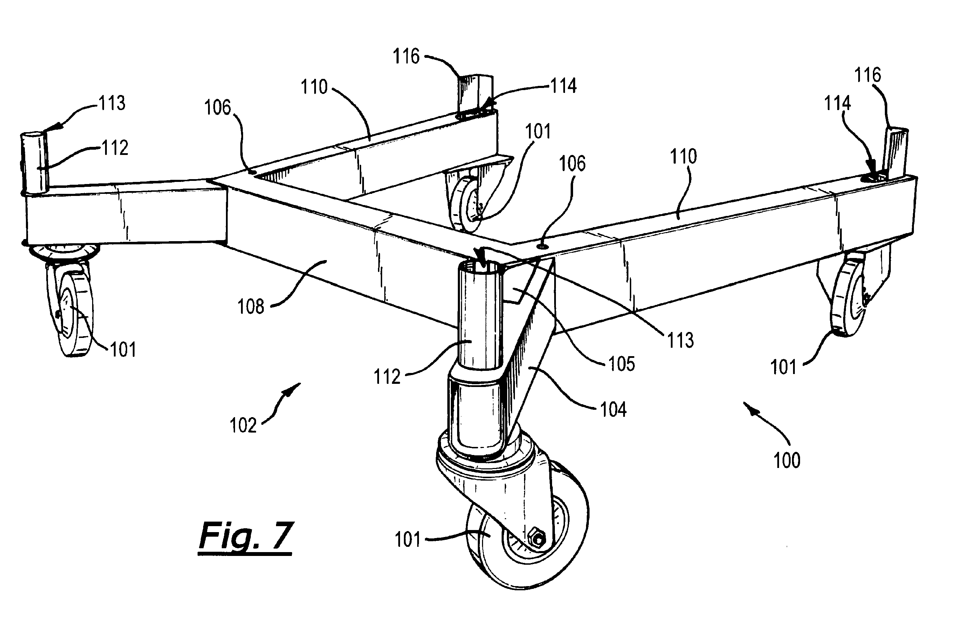

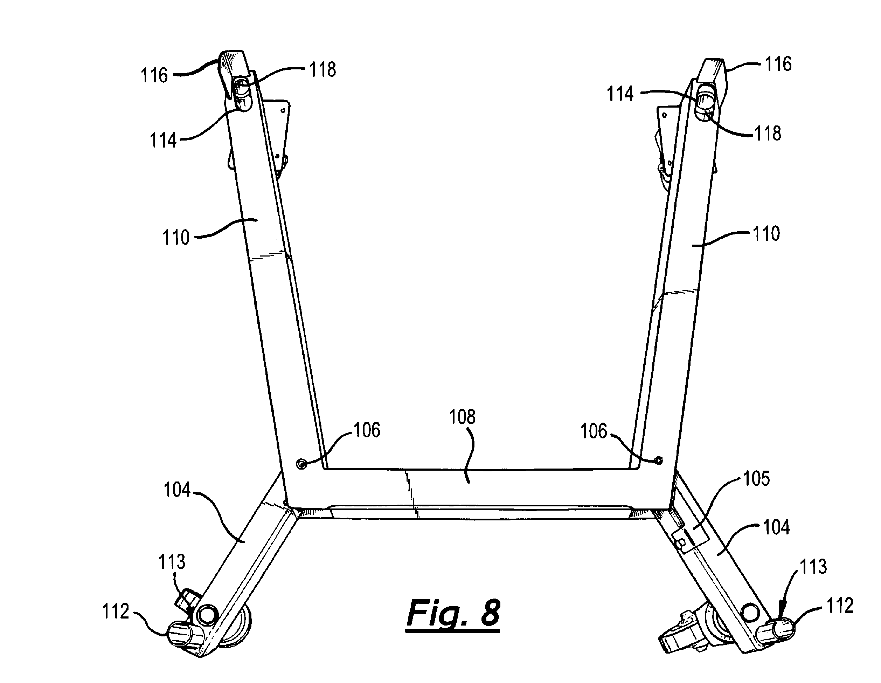

Figures 7 to 11 show a variant base frame 100 for a roll cage comprising a main frame portion 102 and two moveable frame portions 104 pivotally attached to main frame portion 102 at pivot points 106. Main frame portion 102 comprises a central bar 108, from each end of which, and in the same horizontal plane as, leg portions 110 divergently extend. In the embodiment shown, leg portions 110 and central bar 118 are made from steel box-section that has been welded together, thus leg portions 110 extend fixedly from each end of central bar 118.

Each moveable frame portion 104 is pivotally mounted on, and in the same horizontal place as, the proximal end of a leg portion 110, i.e. the end of leg portion 110 closest to central bar 108. Four castors 101 are provided on the underside of base frame 100, one on the distal end of each moveable frame portion 104 and one on the distal end of each leg portion 110.

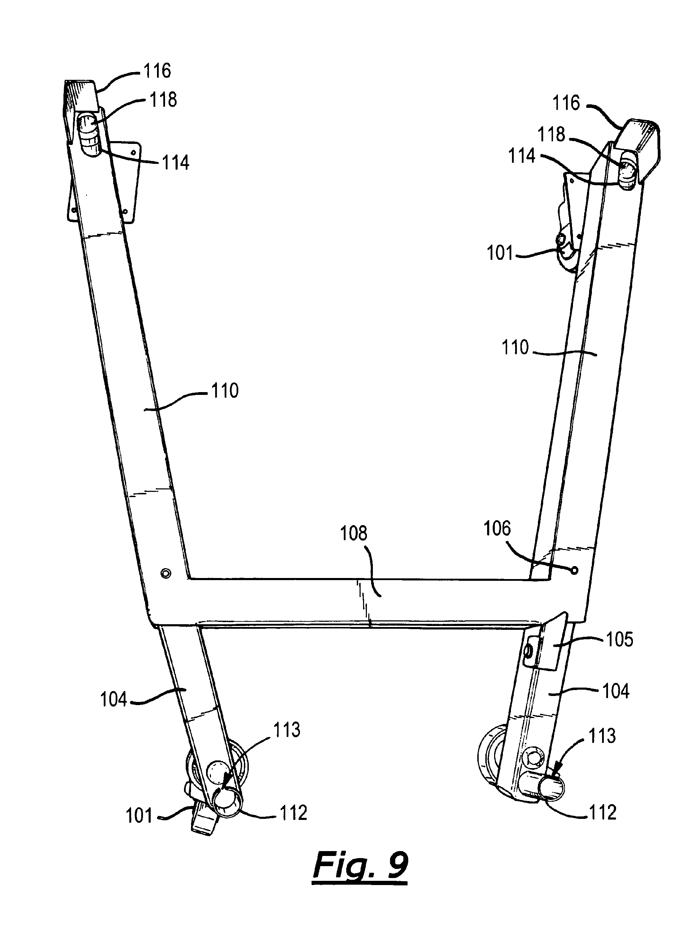

Figures 7, 8 and 11 show base frame 100 in its use configuration, i.e. with moveable frame portions 104 extending divergently from the central bar 108. In this use position, frame 100 has most stability, which is beneficial as this is the position in which a roll cage (not shown) incorporating such a frame 100 would be moved for transporting goods. Figure 9 shows base frame 100 in its non-use configuration, i.e. with moveable frame portions 104 extending convergently from the central bar 108 such that each is substantially co-extensive with its respectively adjacent leg portion 110. In this non-use position, frame 100 is configured for space-efficient packing and stowage. The moveable frame portions 104 may be moved between their position of use and non-use by applying a force, e.g. pushing or pulling, to a side panel that may be fitted thereto to thereby effect pivotal movement of the moveable frame portions 104, without the need to remove the side panel. Additional locking mechanism 105 in the form of a gravity-drop latch is shown in association with one moveable frame portion 104; when said moveable frame portion 104 is in its use position, latch 105 must be manually un-latched (by lifting) to allow said moveable frame portion 104 to be pivoted to its non-use position.

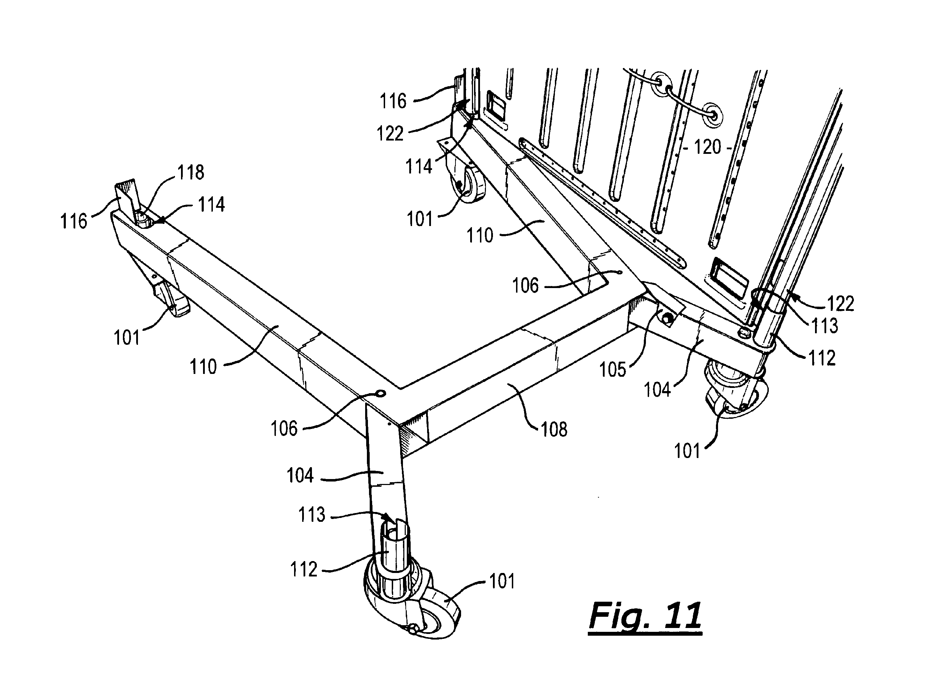

The distal end of each moveable frame portion 104 is provided with first engagement means 112, in the form of cylindrical upward protrusion having a vertical slot 113 therein, for engaging with a second engagement means 122, in the form of a leg, provided in a side panel 120, as shown in Figure 11. The distal end is that end which is farthest from the central bar 108. Correspondingly, the distal end of each leg portion 110 is provided with first engagement means 114, also in the form of an elongate aperture in each, again for engaging with a leg 122 provided in said side panel 120.

Engagement means 114 provided in leg portions 110 are additionally provided with guide means 116 and a movable apertured housing 118, in the form of a bushing. Guide means 116 are provided to guide the leg 122 of a side panel 120 to engagement means 114 during fitment and also to provide additional resilient support to said leg 122 once side panel 120 has been fitted.

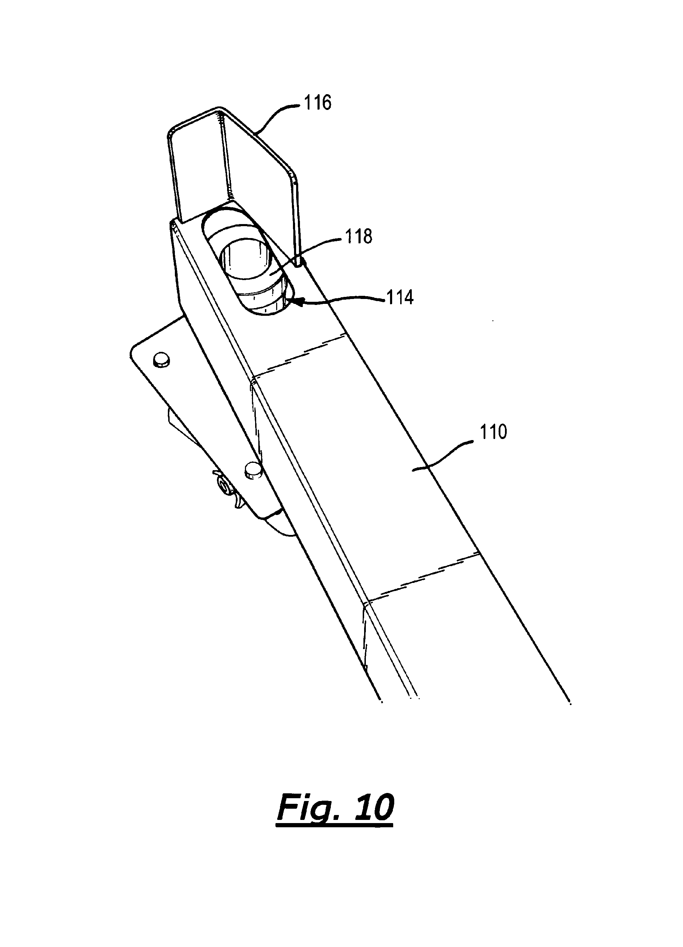

Figure 10 shows in more detail how bushing 118, e.g. made from nylon, is movably provided within each elongate aperture 114 so as to provide mechanical grip to the leg 122 of a side panel 120. Bushing 118 is able to slide within a cavity in the distal end of leg portion 110 and therefore accommodate movements and tolerances in the side panel 120 when (a) it is being fitted for the first time into base frame 100 and (b) when the moveable frame portions 104 are pivoted between their use and non-use positions. The internal diameter of bushing 118 is dimensioned so as to be a snug fit to the leg 122 of side panel 120.

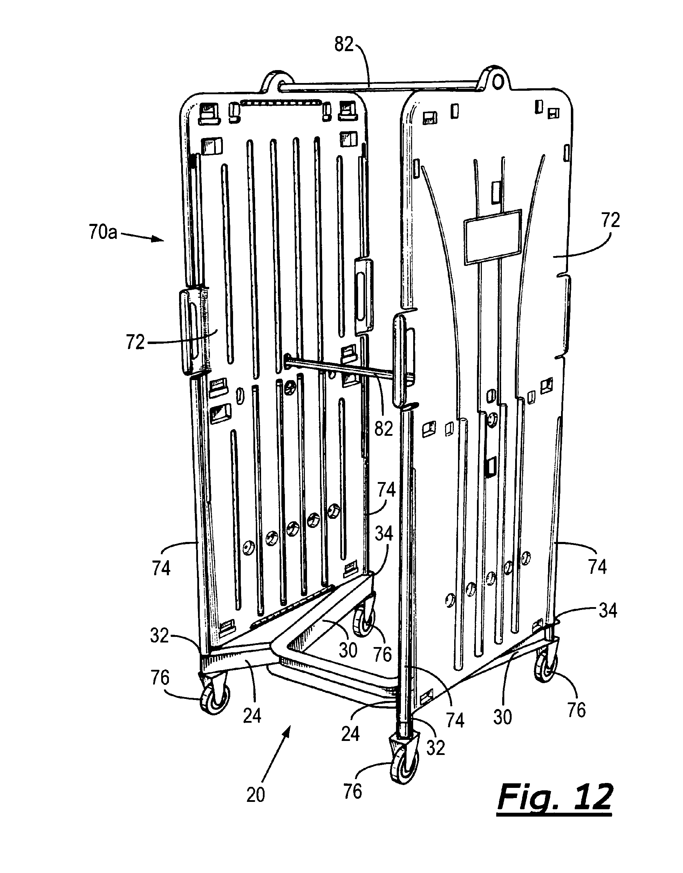

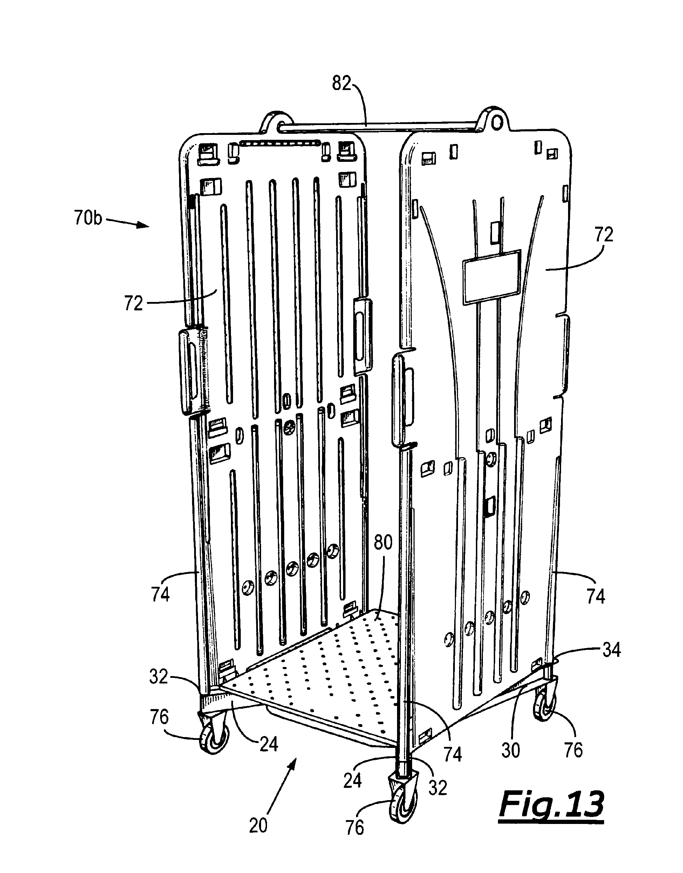

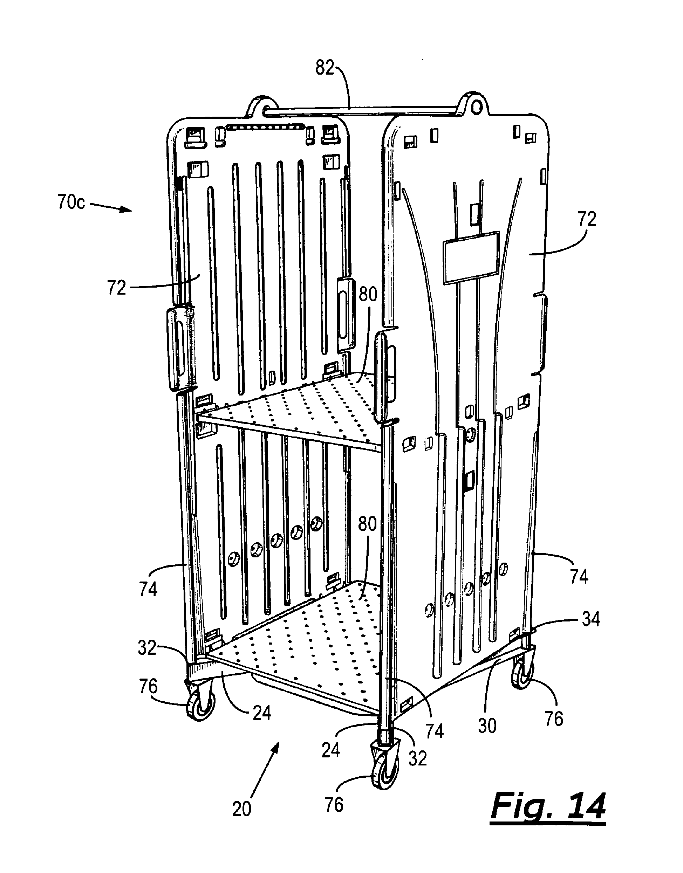

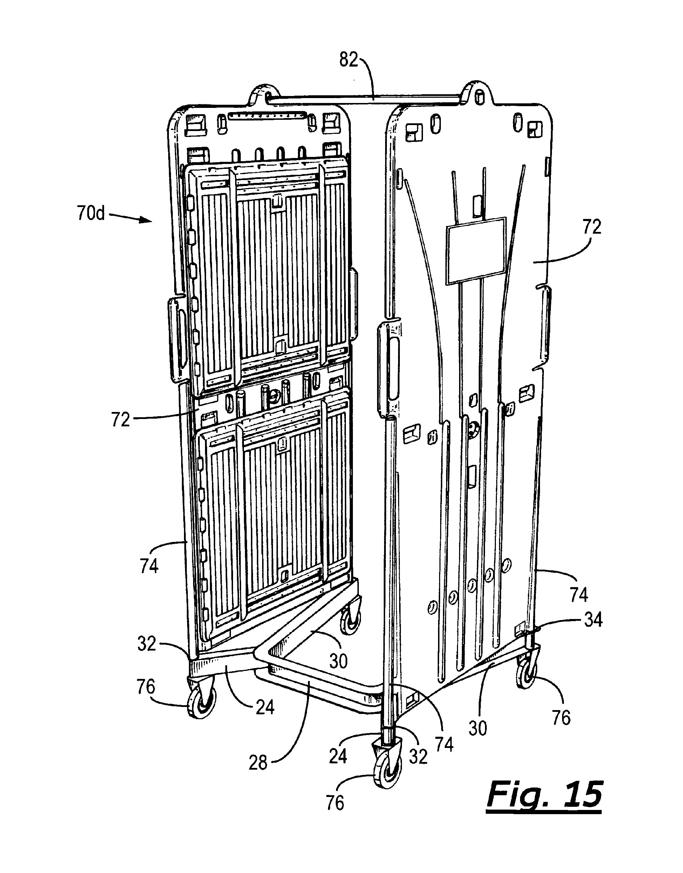

Figures 12 to 16 show a roll cage 70a, 70b, 70c, 70d, 70e comprising a base frame 20 according to the invention into which are fitted two novel and inventive side panels 72, comprising legs 74. Although base frame 20 is shown in these figures, base frame 100 could alternatively be used. As can be seen, the distal ends of both moveable frame portions 24 and leg portions 30 are provided on their undersides with wheels 76, such that there are four in total. Legs 74 of side panels 72 engage with, by fitting into, apertures 32, 34 of frame 20. In doing so, moveable frame portions 24 are locked into position, whether that be their use position or their non-use position, and further pivoting is prevented. Moveable frame portions 24 are unlocked by simply removing side panels 72 from engagement with apertures 32, 34 in frame 20.

The roll cages shown in Figures 12 to 16 are slight variations of one another, in terms of the presence or absence of horizontal tray panels 80 and hanging rails 82. Figures 12 to 15 show roll cages 70a, 70b, 70c, 70d in a position of use, i.e. ready for transporting and/or storing goods.

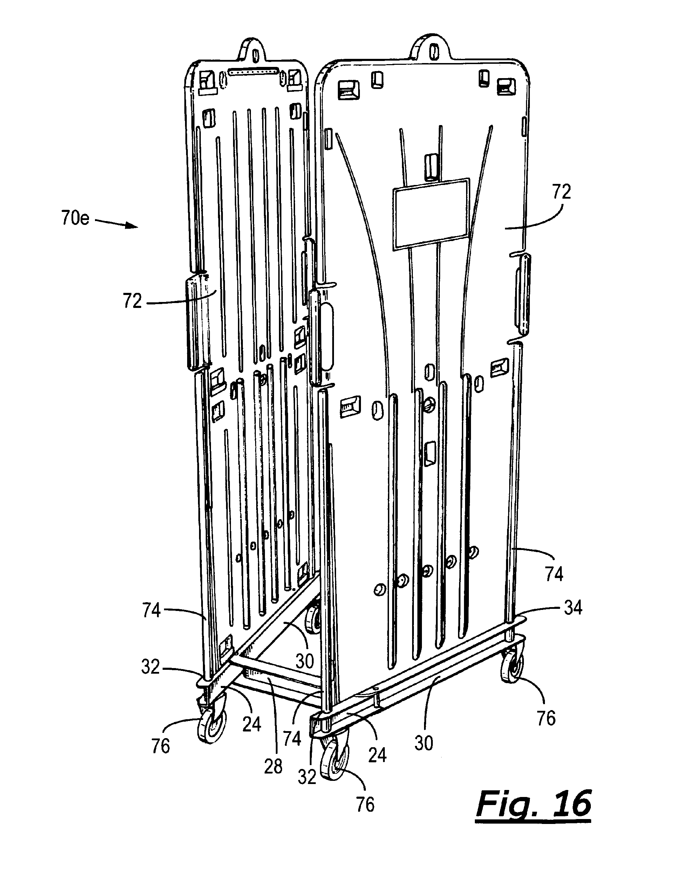

Figure 16 shows roll cage 70e in its stowage configuration, i.e. ready to be tidily stowed away. Roll cage 70e simply comprises two side panels 72 and base frame 20. Moveable frame portions 24 of base frame 20 are pivotally aligned with leg portions 30 and locked into position when legs 74 of side panels 72 engage with, by fitting into, apertures 32, 34 of frame 20.

## Claims

1. A base frame for a roll cage comprising
a main frame portion, and
at least one moveable frame portion which is moveable between a position of use, in which it is lockable, and a position of non-use, for tidy stowage of the roll cage,
each of the main frame portion and the at least one moveable frame portion being provided with first engagement means for engaging with second engagement means provided on a side panel of the roll cage.

2. A base frame as claimed in claim 1 wherein the at least one moveable frame portion is pivotable in the plane of the main frame portion.

3. A base frame as claimed in claim 1 or claim 2 wherein the at least one moveable frame portion is lockable into its use position as a result of the second engagement means of the side panel engaging with the first engagement means provided on each of the main frame portion and the at least one movable frame portion.

4. A base frame as claimed in any preceding claim wherein the at least one moveable frame portion is lockable when in its position of non-use.

5. A base frame as claimed in claim 4 wherein locking of the at least one moveable frame portion occurs as a result of the second engagement means provided on the side panel engaging with the first engagement means provided on each of the main frame portion and the at least one moveable frame portion.

6. A base frame as claimed in any preceding claim wherein the main frame portion comprises a central bar from each end of which, and in the same horizontal plane as, a leg portion divergently extends.

7. A base frame as claimed in claim 6 wherein the leg portions fixedly extend from the ends of the central bar.

8. A base frame as claimed in claim 6 or claim 7 comprising two moveable frame portions, each of which extends divergently from the central bar when in their use positions, each of the moveable frame portions preferably extending convergently from the central bar when in their non-use positions, so as to be substantially co-extensive with their respective adjacent leg portions.

9. A base frame as claimed in any of claims 6 to 8, when dependent on claim 2, wherein the at least one moveable frame portion is pivotally mounted on, and in the same horizontal plane as, the proximal end of a leg portion.

10. A base frame as claimed in any of claims 6 to 8 wherein the distal end of the at least one moveable frame portion is provided with the first engagement means.

11. A base frame as claimed in any of claims 6 to 8 wherein the distal end of each leg portion is provided with the first engagement means.

12. A base frame as claimed in claim 11 wherein resilient bias means are associated with the first engagement means in each leg portion and biased towards the distal end of each leg portion.

13. A base frame as claimed in any of claims 10, 11 or 12 wherein the distance between the first engagement means provided on the at least one moveable frame portion and the first engagement means provided on its adjacent leg portion when the at least one moveable frame portion is in its use position is substantially the same as the distance between the two first engagement means when the at least one moveable frame portion is in its non-use position, the base frame thereby being capable of accommodating a side panel when in either configuration.

14. A roll cage comprising
a base frame, which comprises a main frame portion, and at least one movable frame portion which is movable between a position of use, in which it is lockable, and a position of non-use, each of the main frame portion and the at least one movable frame portion being provided with first engagement means for engaging with a side panel, and
a side panel, which comprises a body portion and second engagement means for engaging with the base frame, wherein the second engagement means is resiliently attached to the body portion by a resilient attachment means, such that the second engagement means is resiliently movable relative to the body portion and thereby readily engageable with the first engagement means of the base frame.

15. A roll cage as claimed in claim 14 wherein the at least one moveable frame portion is locked into its use position as the second engagement means of the side panel engages with the first engagement means of the base frame.
